# EUROPÄISCHE PATENTSCHRIFT

(11) **EP 1 637 453 B1**
(45) Veröffentlichungstag und Bekanntmachung des Hinweises auf die Patenterteilung: **06.07.2011**
(21) Anmeldenummer: 05020261.3
(22) Anmeldetag: 16.09.2005
(51) Int. Cl.: B64D 45/00

(54) **Vorrichtung zur Erfassung von Gleichlauffehlern von Hochauftriebsflächen an Flugzeugen**
Device for detecting the asymmetric deflection of aircraft high lift surfaces
Dispositif pour détecter le désalignement des surfaces hypersustentatrices des aéronefs

(30) Priorität: 16.09.2004 DE 102004044961
(43) Veröffentlichungstag der Anmeldung: 22.03.2006
(73) Patentinhaber: Liebherr-Aerospace Lindenberg GmbH, 88161 Lindenberg/Allgäu (DE)
(72) Erfinder: Schievelbusch, Bernd, 88161 Lindenberg (DE)
(74) Vertreter: Thoma, Michael

(56) Entgegenhaltungen:
- EP-A- 0 726 201
- EP-A- 1 029 784
- EP-A- 1 088 753
- US-A- 5 222 165
- US-A- 5 639 968

## Beschreibung

Die vorliegende Erfindung betrifft eine Vorrichtung zur Erfassung von Gleichlauffehlern von Hochauftriebsflächen wie Landeklappen oder Vorflügeln an Flugzeugen, mit einem optischen Leiter, der über zumindest zwei nebeneinander angeordnete Hochauftriebsflächen hinweg verlegt ist, einer Lichtquelle und einem Lichtempfänger, die verschiedenen Enden des Lichtleiters zugeordnet sind, sowie einer Auswerteeinheit zur Bestimmung eines Gleichlauffehlers anhand des vom Lichtempfänger empfangenen Lichtsignals.

Bei Flugzeugtragflächen sind in der Regel mehrere Hochauftriebsflächen bzw. -klappen in Form von Vorflügeln und/oder Landeklappen nebeneinander angeordnet. Diese werden regelmäßig bei entsprechenden Flugmanövern synchron verfahren. Kommt es hierbei zu Brüchen in der Aufhängung oder Ausfällen oder Verklemmen der Stellglieder dieser Hochauftriebsflächen, kann eine oder sogar mehrere der nebeneinander liegenden Hochauftriebsflächen nicht mehr im gewünschten Maße ausgefahren werden. Hierdurch kommt es einerseits zu unerwünschten Rollmomenten des Flugzeuges durch Asymmetrie, andererseits zu hohen mechanischen Beanspruchungen der Klappenkörper und des verbleibenden intakten Antriebsstranges sowie der Struktur des Flügelkastens.

Um solche Gleichlauffehler der bewegbaren Hochauftriebsflächen zu erkennen, wurden bereits verschiedene Erkennungssysteme vorgeschlagen. Nach einer ersten Lösung erfassen Näherungsschalter oder Winkelsensoren an den Kinematiken der Hochauftriebsklappen deren Ausfahrstellung. Anhand der Signale dieser Sensoren wird elektronisch der Gleichlauf überwacht. Derartige Sensorsysteme sind jedoch vergleichsweise komplex aufgebaut.

Ein anderes bekanntes Erkennungssystem für solche Gleichlauffehler ist das sogenannte Lanyardsystem, bei dem über die Spannweite der zu überwachenden Flügel ein Seil gespannt ist, das am Außenende des flügeläußeren Klappenkörpers befestigt und am flügelinneren Klappenkörper mit einem Schalter verbunden ist. Bei Auftreten von Gleichlauffehlern wird das Seil durch die veränderte Länge des Einbauraumes gestrafft, wodurch es den genannten Schalter betätigt. Aufgrund der großen Einspannlänge des Seiles weist dieses System jedoch ein wenig sensitives Ansprechverhalten auf.

Weiterhin wurde bereits vorgeschlagen, die genannten Gleichlauffehler durch eine sogenannte Überlasterkennung zu erfassen. Die durch den Schieflauf verursachte erhöhte Reibung oder Blockage in der Klappenführung löst die entsprechende Überlastsicherung des Klappenantriebssystems aus. Bei diesem System erfahren der Antrieb und die entsprechenden Strukturbauteile jedoch vergleichsweise hohe mechanische Belastungen, da das System erst bei Erreichen der Überlast anspricht.

Eine Vorrichtung der eingangs genannten Art ist aus der EP 1 029 784 B1 bekannt, welche den nächstliegenden Stand der Technik darstellt und den Oberbegriff des Anspruchs 1 offenbart. Ein Lichtfaserkabel ist über sämtliche Führungskanten-Hochauftriebsflächen eines Flugzeugflügels hinweggeführt und dazu bestimmt, ein von einem Lichtsignalgenerator an einem Ende des Kabels generiertes Lichtsignal an einen Lichtsignaldetektor am anderen Ende des Kabels zu übertragen. Das Lichtkabel ist dabei an jedem Übergang zwischen zwei benachbarten Hochauftriebsflächen durch zwei Stellglieder hindurchgeführt, die unmittelbar nebeneinander liegen und zu verschiedenen Hochauftriebsflächen gehören. Das Kabel ist dabei durch langlochartige Schlitze in den Stellgliedern hindurchgeführt, so dass geringfügige Fluchtungsfehler keine Auswirkungen auf das Kabel haben. Überschreitet die Relativbewegung zwischen zwei benachbarten Hochauftriebsflächen jedoch das zulässige, durch die langlochartigen Schlitze definierte Toleranzmaß, wird das Kabel von den beiden aneinander vorbei gleitenden Stellgliedern abgeschert, so dass die Signalübertragung durch das Lichtleiterkabel unterbrochen ist. Den Ausfall des Signals am Lichtempfänger erkennt die damit verbundene Auswerteeinheit als Gleichlauffehler. Nachteilig an diesem vorbekannten System ist natürlich die Tatsache, dass es bei einem einmaligen Auftreten von Gleichlauffehlern bereits zerstört wird und das Lichtkabel entsprechend ausgetauscht werden muss. Um dies zu vermeiden, soll nach einer zweiten in der EP 1 029 784 B1 beschriebenen Ausführungsform das Kabel zwischen den beiden Stellgliedern der jeweils benachbarten Hochauftriebsflächen jeweils eine Soll-Bruchstelle in Form einer Stecker-/Buchsenverbindung aufweisen. Nach Beseitigung des aufgetretenen Gleichlauffehlers können über die Stecker-/Buchsenanordnung die entsprechenden Segmente des Lichtleiterkabels neu verbunden werden. Diese Anordnung von Stecker-/Buchsenverbindungen zwischen jedem Paar Stellglieder an benachbarten Hochauftriebsflächen ist jedoch relativ aufwendig, insbesondere in der Montage.

Der vorliegenden Erfindung liegt daher die Aufgabe zugrunde, eine verbesserte Vorrichtung der eingangs genannten Art zur Erkennung von Gleichlauffehlern von Hochauftriebsflächen an Flugzeugen zu schaffen, die Nachteile des Standes der Technik vermeidet und letzteren in vorteilhafter Weise weiterbildet. Insbesondere soll ein einfach aufgebautes System mit hoher Ansprechempfindlichkeit geschaffen werden, das ein mehrmaliges Ansprechen ohne aufwendige Zwischenwartung erlaubt.

Erfindungsgemäß wird diese Aufgabe durch eine Vorrichtung nach Anspruch 1 gelöst. Bevorzugte Ausgestaltungen sind Gegenstand der abhängigen Ansprüche.

Erfindungsgemäß ist der optische Leiter also derart verlegt, dass er durch Gleichlauffehler eine bruchfreie Verformung erfährt, die eine Veränderung des jeweils übertragenen Lichtsignals bewirkt. Die Auswerteeinheit ist derart ausgebildet, dass sie die Signalform des vom Lichtempfänger empfangenen Lichtsignals bzw. des daraus erzeugten Lichtempfängerausgabesignals mit der Form eines Soll-Signals vergleicht und das Vorliegen eines Gleichlauffehlers anhand der Abweichung zwischen der Form des Lichtempfängersignals und des Soll-Signals bestimmt. Die Vorrichtung ist insbesondere frei von Signalunterbrechern ausgebildet, die den optischen Leiter bei Gleichlauffehlern durchtrennen würden. Es erfolgt keine bloße Ein-/Aus-Erfassung, sondern eine qualitative Erfassung der am Lichtempfänger ankommenden Signalform. Die Erfindung beruht auf der Erkenntnis, dass eine bruchfreie Verformung des optischen Leiters dessen Reflexionsindex verändert, so dass entsprechend der Verformung des Leiters eine Veränderung des übertragenen Lichtsignals eintritt. Dementsprechend kann durch Erfassung der Abweichung des empfangenen Signals von einem Soll-Signal auf die Verformung des optischen Leiters und hierdurch auf das Vorliegen eines Gleichlauffehlers rückgeschlossen werden. Der optische Leiter braucht deshalb lediglich an den Übergangsstellen zwischen benachbarten Hochauftriebsflächen so montiert werden, dass eine Relativbewegung zwischen den benachbarten Hochauftriebsflächen eine veränderte Verlegungsbahn des optischen Leiters mit sich bringt, so dass dieser eine Biegung und/oder ggf. eine Stauchung bzw. Dehnung erfährt, die zu einer Veränderung der Lichtübertragungscharakteristik des Leiters, insbesondere seines Reflexionsindexes führt.

In Weiterbildung der Erfindung ist als Lichtquelle ein Impulsgeber vorgesehen, der eine pulsförmige Folge von Lichtsignalen in vorbestimmbarer Signalform erzeugt. Die erzeugten Lichtpulse können sinusförmig ausgebildet sein, aber auch Rechteck- oder Dreiecksform aufweisen.

Abweichungen des empfangenen Lichtsignals bzw. des entsprechenden Lichtempfängerausgabesignals von dem entsprechenden Soll-Signal können anhand verschiedener Signalcharakteristika bestimmt werden. Die Auswerteeinheit kann hierzu die Impulslänge, den Impulsabstand zwischen aufeinanderfolgenden Lichtimpulsen, die Impulsamplitude, die lmpulsflankensteigung und/oder den Impulsflankenverlauf erfassen und mit jeweiligen Soll-Werten vergleichen. Eine einen Gleichlauffehler indizierende Abweichung kann angezeigt werden, wenn eine oder auch erst mehrere der das empfangene Signal charakterisierenden Größen von entsprechenden Soll-Größen abweicht.

Das Soll-Signal und/oder die dieses charakterisierenden Werte können in einem mit der Auswerteeinheit verbundenen Speicher abgelegt sein, so dass die Auswerteeinheit die Veränderung des übertragenen Lichtsignals in Folge einer veränderten Verlegungsbahn des optischen Leiters durch einen Vergleich mit dem gespeicherten Soll-Signal bzw. den gespeicherten Werten ermittelt. Alternativ kann die Auswerteeinheit das am Lichtempfänger ankommende Lichtsignal auch unmittelbar mit dem an der Lichtquelle erzeugten Lichtsignal vergleichen und bestimmen, ob jeweils festgestellte Abweichungen untypisch sind, d.h. nicht den Abweichungen entspricht, die bei unverformtem optischen Leiter entstehen. Letzteres hat den Vorteil, dass die Auswertung bei eintretenden Veränderungen an der Lichtquelle automatisch angepasst wird. Die vorgenannte Ausführung, die einen Abgleich mit gespeicherten Signalwerten durchführt, zeichnet sich durch vereinfachte Signalverarbeitung aus.

In Weiterbildung der Erfindung ist der optische Leiter halbspannweitig über alle nebeneinander angeordneten Hochauftriebsflächen, die zu einer Gruppe von Hochauftriebsflächen gehören, verlegt. Hierdurch werden durch Verlegung eines einzigen optischen Leiters sämtliche Hochauftriebsflächen der jeweiligen Gruppe, beispielsweise der Landeklappen einer Flugzeugtragfläche, überwacht.

Die Erfindung wird nachfolgend anhand eines bevorzugten Ausführungsbeispiels und zugehöriger Zeichnungen näher erläutert. In den Zeichnungen zeigen:

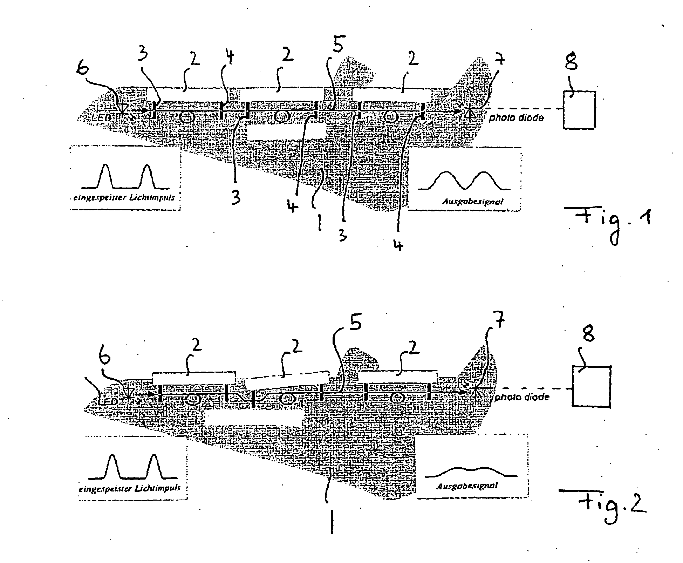

- Fig. 1:: eine schematische Draufsicht auf eine Flugzeugtragfläche mit drei bewegbaren Hochauftriebsflächen an der Tragflächenführungskante sowie der diesen zugeordneten Vorrichtung zur Überwachung von Gleichlauffehlern der Hochauftriebsflächen, wobei die Hochauftriebsflächen in einem synchronen Bewegungszustand ohne Gleichlauffehler und die entsprechen- den optischen Signale an der Lichtquelle und dem Lichtempfänger dargestellt sind, und
- Fig. 2:: eine schematische Draufsicht auf die Tragfläche aus Fig. 1, wobei die Hochauftriebsflächen in ausgefahrener Stellung mit einem Gleichlauffehler an der mittleren Hochauftriebsfläche gezeigt und die sich hierdurch ergebenden Signalveränderungen am Lichtempfänger dargestellt sind.

Wie die Figuren 1 und 2 zeigen, sind an der Führungskante der Flugzeugtragfläche 1 mehrere Hochauftriebsflächen 2 vorgesehen, die durch jeweils zwei Stellglieder 3 und 4 zwischen einer eingefahrenen und einer ausgefahrenen Stellung bewegt werden können. Im normalen Betrieb werden die Stellglieder 3 und 4 aller Hochauftriebsflächen 2 synchron zueinander bewegt, so dass keine Relativbewegung zwischen nebeneinander liegenden Hochauftriebsflächen 2 und den zugehörigen Stellgliedern 3 und 4 auftritt.

Wie Figur 1 zeigt, ist über sämtliche Hochauftriebsflächen 2 hinweg ein optischer Leiter 5 verlegt. In der gezeichneten Ausführungsform ist der optische Leiter 5 dabei an den Stellglieder 3 und 4 befestigt. An einem ersten Ende des optischen Leiters 5 ist eine Lichtquelle 6 vorgesehen, die in der gezeichneten Ausführung eine Leuchtdiode ist und einen Lichtimpulsgeber bildet.

Der optische Leiter 5 überträgt die von der Lichtquelle 6 erzeugten Lichtsignale an einen Lichtempfänger 7, der am anderen Ende des optischen Leiters 5 angeordnet ist und in der gezeichneten Ausführung eine Photodiode ist. Der Lichtempfänger 7 bildet einen Empfangssensor, der die empfangenen Lichtimpulse in eine elektrische Signalform umwandelt, die von einer mit dem Lichtempfänger 7 verbundenen Auswerteeinheit 8 ausgewertet wird.

Werden die Hochauftriebsflächen 2 wie vorgesehen synchron miteinander verfahren, wird die Verlegungsbahn des optischen Leiters 5 während des Verfahrens nur geringfügig durch elastische Verformungen der Tragfläche 1 beeinflusst. Wird der Gleichlauf des System jedoch an einer der Hochauftriebsflächen 2 z. B. durch eine mechanische Blockage in der Klappenführung oder durch einen sogenannten Disconnect gestört, so wird die Verlegungsbahn des optischen Leiters 5 am Übergang zwischen zwei benachbarten Hochauftriebsflächen 2 verändert, wie dies Fig. 2 zeigt. Der optische Leiter 5 ist dabei derart an den Stellgliedern 3 und 4 der Hochauftriebsflächen 2 befestigt, dass ein Gleichlauffehler und damit eine Relativbewegung zwischen zwei benachbarten Stellgliedern 3 und 4 zweier benachbarter Hochauftriebsflächen 2 zu einer Verformung des optischen Leiters 5 führt, die eine Veränderung des Reflexionsindexes des Leiters mit sich bringt, so dass die Lichtimpulse, die von dem optischen Leiter 5 von der Lichtquelle 6 an den Lichtempfänger 7 übertragen werden, in ihrer Signalform verändert werden. Wie Figur 2 zeigt, kann hierbei der Lichtimpuls insbesondere gestaucht werden, d.h. die Impulsamplitude kann verkleinert, die Impulslänge vergrößert, der Impulsabstand verkleinert, die Impulsflankensteigung verringert und insgesamt der Impulsflankenverlauf so verändert werden, dass die an sich vorgesehene Sohle zwischen zwei Lichtimpulsen nicht mehr erreicht wird (vgl. Figur 2).

Die Auswerteeinheit 8 vergleicht die am Lichtempfänger angekommene Signalform bzw. das entsprechend vom Lichtempfänger abgegebene elektrische Signal mit dem Soll-Signal, so wie es bei einem unverformten optischen Leiter 5 am Lichtempfänger vorhanden wäre und in Figur 1 gezeigt ist. Die Veränderung wird von der Auswerteeinheit 8 als Fehler erkannt, woraufhin die Abschaltung des Antriebssystems für die Bewegung der Hochauftriebsflächen 2 initiiert wird sowie eine Warnmeldung an den Flugzeugführer ausgegeben wird.

Die beschriebene Vorrichtung zur Erkennung von Gleichlauffehlern der Hochauftriebsflächen 2 hat keine bewegten Teile und ist insofern verschleiß- und wartungsfrei. Dadurch, dass bei einem auftretenden Gleichlauffehler der optische Leiter 5 nicht wie im Stand der Technik durchtrennt wird, sondem lediglich bruchfrei verformt wird, ist auch ein mehrmaliges Ansprechen des Erkennungssystems ohne aufwendige zwischengeschaltete Wartungsschritte möglich.

Gegenüber dem Stand der Technik mit dem sogenannten Lanyardsystem wird eine erhöhte Ansprechempfindlichkeit erreicht. Zudem ist es im Vergleich zu den vorbekannten Lösungen mit Winkelsensoren und Näherungsschaltern deutlich weniger komplex und daher zuverlässiger und billiger.

Gegenüber Systemen, die erst bei Erreichen der Überlast abschalten, wird eine geringere Bauteilbelastung erreicht, wodurch die Auslegung der Antriebs- und Strukturbauteile auf geringere Lasten möglich ist, wodurch ein geringeres Flugzeuggewicht erreicht wird.

Zudem zeichnet sich die Vorrichtung durch weitgehende Unempfindlichkeit gegen Umgebungseinflüsse aus.

## Patentansprüche

1. Vorrichtung zur Erfassung von Gleichlauffehlern von Hochauftriebsflächen (2) wie Landeklappen oder Vorflügeln an Flugzeugen, mit einem optischen Leiter (5), der über zumindest zwei nebeneinander angeordnete Hochauftriebsflächen (2) hinweg verlegt ist, einer Lichtquelle (6) und einem Lichtempfänger (7), die verschiedenen Enden des optischen Leiters (5) zugeordnet sind, sowie einer Auswerteeinheit (8) zur Bestimmung eines Gleichlauffehlers der Hochauftriebsflächen (2) anhand des vom Lichtempfänger (7) empfangenen Lichtsignals, **dadurch gekennzeichnet, dass** der optische Leiter (5) derart verlegt ist, dass der optische Leiter (5) durch Gleichlauffehler eine bruchfreie Verformung erfährt und demzufolge eine Veränderung übertragener Lichtsignale bewirkt, und dass die Auswerteeinheit (8) die Signalform des vom Lichtempfänger (7) empfangenen Lichtsignals bzw. eines daraus abgeleiteten Lichtempfängerausgabesignals mit einer Soll-Signalform vergleicht und das Vorliegen eines Gleichlauffehlers anhand der Formabweichung zwischen dem empfangenen Lichtsignal bzw. dem daraus abgeleiteten Lichtempfängerausgabesignal und dem Soll-Signal bestimmt.

2. Vorrichtung nach dem vorhergehenden Anspruch, wobei sie frei von Signalunterbrechem zum Kappen des Leiters ausgebildet ist.

3. Vorrichtung nach einem der vorhergehenden Ansprüche, wobei die Lichtquelle (6) als Impulsgeber ausgebildet ist, der eine pulsförmige Folge von Lichtsignalen in vorbestimmbarer Signalform erzeugt.

4. Vorrichtung nach einem der vorhergehenden Ansprüche, wobei die Auswerteeinheit (8) die Signalformabweichung anhand von Abweichungen in der Impulslänge, dem Impulsabstand, der Impulsamplitude, der Impulsflankensteigung und/oder dem Impulsflankenverlauf bestimmt.

5. Vorrichtung nach einem der vorhergehenden Ansprüche, wobei die Auswerteeinheit (8) für die Bestimmung der Signalformabweichung auf ein in einem Speicher gespeichertes Soll-Signal zurückgreift, das dem am Lichtempfänger empfangenen Lichtsignal und/oder dem daraus abgeleiteten Lichtempfängerausgabesignal bei unverformtem optischen Leiter (5) entspricht.

6. Vorrichtung nach einem der vorhergehenden Ansprüche, wobei der optische Leiter (5) halbspannweitig über alle nebeneinander angeordneten Hochauftriebsflächen (2), die zu einer Gruppe von Hochauftriebsflächen (2) gehören, verlegt ist.

## Claims

1. Apparatus for detection of synchronization errors of high-lift surfaces (2) such as flaps or slats on aircraft, having an optical waveguide (5) which is laid over at least two high-lift surfaces (2) which are arranged alongside one another, having a light source (6) and having a light receiver (7), which are associated with different ends of the optical waveguide (5), and having an evaluation unit (8) for determination of any synchronization error between the high-lift surfaces (2) on the basis of the light signal received by the light receiver (7), **characterized in that** the optical waveguide (5) is laid such that the optical waveguide (5) is deformed without breaking by synchronization errors and in consequence changes the transmitted light signals, and **in that** the evaluation unit (8) compares the signal form of the light signal received by the light receiver (7), or a light receiver output signal derived therefrom, with a nominal signal form, and determines the presence of a synchronization error on the basis of the form discrepancy between the received light signal, or the light receiver output signal derived therefrom, and the nominal signal.

2. Apparatus according to the preceding claim, wherein said apparatus has no signal interrupters for capping the waveguide.

3. Apparatus according to one of the preceding claims, wherein the light source (6) is a pulse transmitter, which produces a pulsed sequence of light signals with a predeterminable signal form.

4. Apparatus according to one of the preceding claims, wherein the evaluation unit (8) determines the signal form discrepancy on the basis of discrepancies in the pulse length, the pulse separation, the pulse amplitude, the pulse flank gradient and/or the pulse flank profile.

5. Apparatus according to one of the preceding claims, wherein the evaluation unit (8) accesses a nominal signal in order to determine the signal form discrepancy, which nominal signal is stored in a memory and corresponds to the light signal received at the light receiver, and/or the light receiver output signal derived therefrom, when the optical waveguide (5) is not deformed.

6. Apparatus according to one of the preceding claims, wherein the optical waveguide (5) is laid over half the span of all of the high-lift surfaces (2) which are arranged alongside one another and belong to a group of high-lift surfaces (2).

## Revendications

1. Dispositif de détection de défauts d'alignement de surfaces hypersustentatrices (2) comme des volets d'atterrissage ou des volets avant à des avions, avec un conducteur optique (5) qui est posé sur au moins deux surfaces hypersustentatrices (2) disposées l'une à côté de l'autre, une source de lumière (6) et un récepteur de lumière (7), qui sont associés à des extrémités différentes du conducteur optique (5), et avec une unité d'évaluation (8) pour la détermination d'un défaut d'alignement des surfaces hypersustentatrices (2) à l'aide du signal de lumière reçu par le récepteur de lumière (7), **caractérisé en ce que** le conducteur optique (5) est posé de façon que le conducteur optique (5), par des défauts d'alignement, est soumis à une déformation sans rupture et provoque de ce fait une modification de signaux de lumière transmis, et **en ce que** l'unité d'évaluation (8) compare la forme du signal de lumière reçu par le récepteur de lumière (7) ou d'un signal d'émission du récepteur de lumière dérivé de celui-ci avec une forme de signal de consigne et détermine la présence d'un défaut d'alignement à l'aide de l'écart de la forme entre le signal de lumière reçu ou le signal d'émission de récepteur de lumière dérivé de celui-ci et le signal de consigne.

2. Dispositif selon la revendication précédente, où celui-ci est réalisé d'une manière exempte d'interruptions du signal pour l'écrêtage du conducteur.

3. Dispositif selon l'une des revendications précédentes, où la source de lumière (6) est réalisée en tant que générateur d'impulsions qui génère une succession en forme d'impulsions de signaux de lumière en une forme de signal prédéfinissable.

4. Dispositif selon l'une des revendications précédentes, où l'unité d'évaluation (8) détermine la déviation de la forme du signal à l'aide de déviations dans la longueur d'impulsion, l'écart d'impulsion, l'amplitude d'impulsion, la montée du front positif d'impulsion et/ou le tracé de flanc d'impulsion.

5. Dispositif selon l'une des revendications précédentes, où l'unité d'évaluation (8), pour la détermination de la déviation de la forme du signal, fait appel à un signal de consigne stocké dans une mémoire, qui correspond au signal de lumière reçu au récepteur de lumière et/ou au signal d'émission de récepteur de lumière dérivé de celui-ci pour un conducteur optique non déformé (5).

6. Dispositif selon l'une des revendications précédentes, où le conducteur optique (5) est posé, en s'étendant sur la moitié de l'envergure, sur toutes les surfaces hypersustentatrices (2) disposées les unes à côté des autres qui appartiennent à un groupe de surfaces hypersustentatrices (2).
